# EUROPÄISCHE PATENTSCHRIFT

(11) **EP 3 576 869 B1**
(45) Veröffentlichungstag und Bekanntmachung des Hinweises auf die Patenterteilung: **30.08.2023**
(21) Anmeldenummer: 18700328.0
(22) Anmeldetag: 10.01.2018
(51) Int. Cl.: B01J 19/18, B01J 19/12, B01J 19/00, C08L 27/06

(54) **RÜHRVORRICHTUNG**
STIRRING DEVICE
DISPOSITIF D'AGITATION

(30) Priorität: 03.02.2017 DE 102017102165
(43) Veröffentlichungstag der Anmeldung: 11.12.2019
(73) Patentinhaber: EKATO Rühr- und Mischtechnik GmbH, 79650 Schopfheim (DE)
(72) Erfinder: MULTNER, Benjamnin, 79664 Wehr (DE); BERNER, Christian, 79576 Weil am Rhein (DE); KÖNIG, Marco, 79650 Schopfheim (DE)
(74) Vertreter: Daub, Thomas
(86) Internationale Anmeldenummer: PCT/EP2018/050546
(87) Internationale Veröffentlichungsnummer: WO 2018/141517

(56) Entgegenhaltungen:
- WO-A1-93/15830
- WO-A1-2007/057082
- WO-A1-2010/055288
- CN-U- 202 803 248
- US-A1- 2007 025 889

## Beschreibung

### Stand der Technik

Die Erfindung betrifft eine Rührvorrichtung nach dem Oberbegriff des Anspruchs 1 und ein Verfahren nach dem Oberbegriff des Anspruchs 12

Aus der Kunststoffchemie ist bekannt, in einem Rührkessel Polyvinylchlorid durch Bestrahlung mit UV-Licht zu chlorieren. Hierzu kommt eine UV-Lampe zum Einsatz, welche von einer spröden Einhausung, insbesondere aus Quarzglas, umgeben ist, wobei die Einhausung somit anfällig gegenüber Beschädigungen durch ein Rührwerk des Rührkessels, insbesondere durch Schwingungen, Scherkräfte, Korrosion und/oder aufgrund von Montage- und/oder Herstellungstoleranzen auftretenden Verspannungen an einer Halterung, ist. Aus diesem Grund wird die Einhausung üblicherweise relativ kurz gehalten und vorzugsweise lediglich an zwei Punkten innerhalb eines Behälters des Rührkessels befestigt.

Aus WO 2010/055288 A1, WO 93/15830 A1, CN 202 803 248 U und US 2007/025889 A1 sind Halterungen für spröde Einheiten bekannt, welche dazu vorgesehen sind, die spröden Einheiten in vordefinierten, nicht anpassbaren Haltepositionen zu halten.

Die Aufgabe der Erfindung besteht insbesondere darin, verbesserte Eigenschaften in Bezug auf eine Zuverlässigkeit zu erzielen. Die Aufgabe wird erfindungsgemäß durch die Merkmale der Patentansprüche 1 und 12 gelöst, während vorteilhafte Ausgestaltungen und Weiterbildungen der Erfindung den Unteransprüchen entnommen werden können.

### Vorteile der Erfindung

Die Erfindung geht aus von einer Rührvorrichtung, insbesondere einer Reaktorrührvorrichtung, mit zumindest einer Halterung, insbesondere zumindest zwei und vorzugsweise mehreren Halterungen, welche dazu vorgesehen ist/sind zumindest eine, zumindest eine insbesondere aus einem Glas, vorzugsweise einem Quarzglas, bestehende spröde Einheit, insbesondere zumindest jeweils zumindest eine spröde Einheit, insbesondere eine Strahlungseinheit, innerhalb eines Behälters relativ zu wenigstens einer Behälterwand des Behälters zu halten, und welche hierzu insbesondere jeweils zumindest eine Halteeinheit aufweist/aufweisen.

Es wird vorgeschlagen, dass durch die Halteeinheit zumindest eine Halteposition der Halterung relativ zur Behälterwand anpassbar ist.

Durch diese Ausgestaltung kann eine Zuverlässigkeit verbessert werden. Vorteilhaft kann eine Sicherheit, insbesondere eine Montagesicherheit, verbessert werden, da Insbesondere Herstellungs- und/oder Montagetoleranzen durch Anpassung der Halteposition ausgeglichen werden können. Ferner kann vorteilhaft eine Betriebssicherheit verbessert werden, da Beschädigungen durch ein Rührwerk, insbesondere durch durch das Rührwerk verursachte und auf die spröde Einheit einwirkende Schwingungen und/oder Scherkräfte, verringert werden können. Des Weiteren kann insbesondere eine vorteilhaft kompakte Bauweise erzielt werden, so dass auf die spröde Einheit wirkende Schwingungen und/oder Scherkräfte verringert und/oder gleichmäßig abgeleitet werden können. Besonders vorteilhaft kann eine Standzeit erhöht werden. Ferner kann insbesondere ein Austausch und/oder eine Reinigung von Verschleißteilen vereinfacht werden.

Unter einer "Rührvorrichtung" soll insbesondere eine Vorrichtung verstanden werden, welche zumindest ein Rührwerk umfasst und welche vorzugsweise zu einer Bearbeitung, insbesondere zumindest zu einer Homogenisierung, Suspendierung, Emulgierung und/oder Begasung zumindest eines Mediums und/oder Wärmeübertragung innerhalb zumindest eines Mediums vorgesehen ist. Insbesondere ist die Rührvorrichtung zumindest Teil eines Rührkessels und/oder einer Rühranlage und/oder eines insbesondere gerührten Reaktors. Vorteilhaft kann die Rührvorrichtung den gesamten Rührkessel und/oder die gesamte Rühranlage umfassen. Die Rührvorrichtung ist vorzugsweise zur Bearbeitung und/oder Herstellung eines Mediums vorgesehen, welches zumindest einen Kunststoff, vorzugsweise Polyvinylchlorid, aufweist. Des Weiteren kann das Medium insbesondere weitere Komponenten umfassen, wie beispielsweise Lösungsmittel, Stabilisatoren, Farbstoffe und/oder weitere Kunststoffe. Unter einer "Reaktorrührvorrichtung" soll insbesondere eine Rührvorrichtung verstanden werden, welche zur Bearbeitung des Mediums zumindest zu einer Initiierung und/oder Aufrechterhaltung einer chemischen Reaktion des Mediums vorgesehen ist, wie beispielsweise einer Polymerisation und/oder einer Halogenisierung, insbesondere Chlorierung. Vorzugsweise ist die Reaktorvorrichtung eine Photoreaktorvorrichtung. Unter "vorgesehen" soll speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Rührvorrichtung kann insbesondere den Behälter umfassen. Der Behälter ist insbesondere rotationssymmetrisch und vorzugsweise zumindest im Wesentlichen zylinderförmig ausgebildet. Eine Behälterwandung bildet insbesondere einen Zylindermantel des Behälters aus. Der Behälter weist insbesondere einen vorzugsweise gewölbten Deckel und/oder Boden auf, welcher mit der Behälterwand verbunden ist. Der Deckel und/oder der Boden können/kann insbesondere einstückig mit der Behälterwand verbunden sein. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ können/kann der Deckel und/oder der Boden mit der Behälterwand kraft- und/oder formschlüssig verbunden sein. Unter "einer kraft- und/oder formschlüssigen Verbindung" soll dabei insbesondere eine lösbare Verbindung verstanden werden, wobei eine Haltekraft zwischen zwei Bauteilen vorzugsweise durch einen geometrischen Eingriff der Bauteile ineinander und/oder durch eine Reibkraft zwischen den Bauteilen übertragen wird. Insbesondere zu einer Montage der spröden Einheit und vorzugsweise zu einer Kontaktierung, wie beispielsweise zu einer Energieversorgung, weist der Behälter, insbesondere der Deckel und/oder der Boden, zumindest eine Aufnahmeausnehmung zumindest für die spröde Einheit, insbesondere die Strahlungseinheit, auf, wobei die Aufnahmeausnehmung vorzugsweise mittels eines Flansches verschließbar ist.

Die Rührvorrichtung kann insbesondere zumindest die spröde Einheit umfassen. Unter einer "spröden" Einheit soll in diesem Zusammenhang eine Einheit verstanden werden, welche durch äußere Krafteinwirkung elastisch verformbar ist und durch diese zerstörbar ist, bevor die Einheit dauerhaft plastisch verformbar ist. Insbesondere bei einer Abweichung eines im Wesentlichen linearen Verlaufs einer Spannungs-Verformungs-Kennlinie der spröden Einheit wird diese zerstört. Die spröde Einheit ist insbesondere durch eine Verformung um höchstens 10 %, vorzugsweise um höchstens 5 % und besonders bevorzugt um höchstens 1 % zerstörbar. Ferner soll unter "spröde" insbesondere auch brüchig und/oder zerbrechlich verstanden werden. Die spröde Einheit ist insbesondere Teil der Strahlungseinheit, welche vorzugsweise eine Strahlungsquelle, insbesondere eine UV-Lampe, umfasst, welche zu einer Beaufschlagung des Mediums mit elektromagnetischer Strahlung, insbesondere mit UV-Strahlung, vorgesehen ist und welche insbesondere dazu vorgesehen ist, zumindest eine chemische Reaktion zumindest eines Mediums zumindest zu initiieren und/oder aufrechtzuerhalten. Die Strahlungsquelle kann beispielsweise eine Lampe, eine LED und/oder einen Laser aufweisen. Die spröde Einheit bildet eine Einhausung zum Schutz der Strahlungsquelle. Die Strahlungsquelle ist insbesondere zumindest teilweise, vorzugsweise zumindest zu einem Großteil und besonders bevorzugt vollständig zumindest in Umfangsrichtung von der spröden Einheit, insbesondere der Einhausung umgeben. Die Einhausung besteht insbesondere zumindest teilweise, vorzugsweise zumindest zu einem Großteil und besonders bevorzugt vollständig aus einem Material, welches für die Strahlung der Strahlungsquelle zumindest transluzent und/oder vorzugsweise transparent ist. Unter dem Ausdruck "zumindest zu einem Großteil" soll dabei insbesondere zumindest zu 55 %, vorteilhaft zumindest zu 65 %, vorzugsweise zumindest zu 75 %, besonders bevorzugt zumindest zu 85 % und besonders vorteilhaft zumindest zu 95 % verstanden werden. Die Einhausung ist insbesondere als ein Glasrohr, insbesondere als ein Quarzglasrohr, ausgebildet. Die spröde Einheit ist insbesondere länglich ausgebildet. Unter einem "länglichen Objekt" soll in diesem Zusammenhang insbesondere ein Objekt verstanden werden, dessen Haupterstreckung zumindest 10-mal, vorzugsweise zumindest 25-mal, bevorzugt zumindest 35-mal und besonders bevorzugt zumindest 45-mal so groß ist wie eine Erstreckung des Objekts senkrecht zu dessen Haupterstreckung und/oder insbesondere dessen Durchmesser. Vorzugsweise entspricht die Haupterstreckung der spröden Einheit zumindest 50 %, vorzugsweise zumindest 75 % und besonders bevorzugt zumindest 90 % der Haupterstreckung des Behälters. Unter einer "Haupterstreckung" eines Objekts soll dabei insbesondere eine längste Kante eines kleinsten gedachten Quaders verstanden werden, welcher das Objekt gerade noch vollständig umschließt.

Insbesondere für den Fall, dass die Rührvorrichtung zumindest zwei oder mehrere Halterungen aufweist, sind diese zueinander in Umfangsrichtung des Behälters versetzt angeordnet. Insbesondere sind die Halterungen rotationssymmetrisch zueinander angeordnet, so dass vorteilhaft eine Ordnung der Rotationssymmetrie gleich der Anzahl an Halterungen ist. Unter einer "Halteposition" soll in diesem Zusammenhang insbesondere eine Position verstanden werden, in welcher die Halterung dazu vorgesehen ist, die spröde Einheit in einem montierten Zustand zu halten. Insbesondere ist die Halteposition eine Schnittebene der Schwerpunktachse der spröden Einheit und einer Haupterstreckungsebene zumindest einer Halteeinheit der Halterung. Eine Haupterstreckung einer in der Halteposition gehaltenen spröden Einheit ist insbesondere zumindest im Wesentlichen parallel zu der Behälterwand. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Halteeinheit ist insbesondere dazu vorgesehen, die spröde Einheit an einem Abschnitt zu halten, welcher verschieden ist von freien Enden der spröden Einheit. Unter "anpassbar", soll veränderlich und/oder fähig zu einem Ausgleich zumindest von Herstellungs- und Montagetoleranzen oder auch von einer Fehlpositionierung verstanden werden.

Es wird ferner vorgeschlagen, dass die Halteeinheit zumindest eine Trägereinheit aufweist, welche dazu vorgesehen ist, zumindest teilweise eine Gewichtskraft und/oder eine Querkraft der spröden Einheit aufzunehmen, und welche in zumindest einem montierten Zustand mit der Behälterwand verbunden ist. Vorzugsweise ist die Trägereinheit stoffschlüssig mit der Behälterwand verbunden. Unter "stoffschlüssig verbunden" soll insbesondere verstanden werden, dass die Masseteile durch atomare oder molekulare Kräfte zusammengehalten werden, wie beispielsweise beim Löten, Schweißen, Kleben und/oder Vulkanisieren. Alternativ oder zusätzlich kann die Trägereinheit kraft- und/oder formschlüssig mit der Behälterwand verbunden sein. Die Trägereinheit weist zur Aufnahme der spröden Einheit insbesondere zumindest eine Halteausnehmung auf. Die Trägereinheit weist insbesondere zumindest einen Verbindungsfuß, vorzugsweise zumindest zwei Verbindungsfüße auf, mittels dessen sich die Trägereinheit an der Behälterwand abstützt und welcher/welche zu einer Verbindung der Trägereinheit mit der Behälterwand vorgesehen ist/sind. Die Trägereinheit besteht insbesondere aus einem korrosionsbeständigen Material, wie beispielsweise einem Metall, insbesondere Titan. Hierdurch kann vorteilhaft eine Stabilität der Verbindung der Halteeinheit mit dem Behälter verbessert werden. Insbesondere kann eine Kontaktfläche zwischen Behälterwand und Trägereinheit vergrößert werden, wodurch eine Gewichtskraft und/oder eine Querkraft sowie insbesondere Schwingungen und/oder Scherkräfte gleichmäßig auf die Behälterwand übertragen werden können.

Weiter wird vorgeschlagen, dass die Halteeinheit zumindest eine Anbindungseinheit aufweist, welche dazu vorgesehen ist, die spröde Einheit zumindest teilweise, insbesondere zumindest zu einem Großteil und besonders bevorzugt vollständig, in Umfangsrichtung zu umgreifen und mit der Behälterwand, insbesondere mit der Trägereinheit, zu verbinden. Insbesondere umgreift die Anbindungseinheit die spröde Einheit von zumindest zwei einander gegenüberliegenden Seiten. Insbesondere ist die Anbindungseinheit dazu vorgesehen, die spröde Einheit kraft- und/oder formschlüssig mit der Behälterwand, insbesondere mit der Trägereinheit, zu verbinden, und zwar vorzugsweise über einen Reibschluss mit der spröden Einheit. Alternativ oder zusätzlich ist auch eine stoffschlüssige Verbindung denkbar. Hierdurch kann insbesondere auf einfache Art und Weise die spröde Einheit mit der Behälterwand, insbesondere mit der Trägereinheit, verbunden werden. Weiter vorteilhaft kann die spröde Einheit besonders materialschonend gehalten werden.

Um insbesondere eine Montage zu vereinfachen, wird ferner vorgeschlagen, dass die Anbindungseinheit in zumindest einem vormontierten Zustand relativ zu der Trägereinheit beweglich gelagert ist. Insbesondere ist die Anbindungseinheit zumindest in einer Ebene, welche zumindest im Wesentlichen senkrecht zur Behälterwand ist, beweglich gelagert und vorzugsweise zumindest in einer Richtung zumindest im Wesentlichen parallel zu der Behälterwand unbeweglich gelagert. Unter einem "vormontierten Zustand" soll ein Zustand verstanden werden, in welchem Komponenten beweglich miteinander verbunden sind, sich aber noch nicht in ihrer Endposition befinden, in welcher sie insbesondere fest miteinander verbunden werden.

Es wird ferner vorgeschlagen, dass die Anbindungseinheit zumindest ein Führungselement, insbesondere zumindest zwei relativ zu einer Haupterstreckung der spröden Einheit einander gegenüberliegende Führungselemente, zur beweglichen Lagerung zur Trägereinheit aufweist. Das Führungselement besteht insbesondere aus einem korrosionsbeständigen Material, wie beispielsweise einem Metall, insbesondere Titan. Hierdurch kann eine vorteilhafte Lagerung der Anbindungseinheit erzielt werden. Ferner kann eine präzise Justierung der Halteposition mittels des Führungselements erfolgen.

In einer bevorzugten Ausgestaltung der Erfindung wird vorgeschlagen, dass die Anbindungseinheit zumindest ein weiteres Führungselement, vorzugsweise zwei einander gegenüberliegende weitere Führungselemente, aufweist und die Trägereinheit in zumindest einem montierten Zustand zwischen dem Führungselement und dem weiteren Führungselement, insbesondere zwischen den Führungselementen und den weiteren Führungselementen, vorzugsweise in Richtung der Behälterwand, eingeklemmt ist. Das Führungselement und das weitere Führungselement sind mittels einer Schraubverbindung miteinander verbunden, wodurch insbesondere die Trägereinheit zwischen dem Führungselement und dem weiteren Führungselement verklemmt ist. Hierdurch kann eine Stabilität der Lagerung verbessert werden. Insbesondere können die Führungselemente auf einfache Art und Weise ausgetauscht und/oder gereinigt werden.

Des Weiteren wird vorgeschlagen, dass die Anbindungseinheit zumindest ein Kontaktelement aufweist, welches dazu vorgesehen ist, zumindest eine Kontaktfläche zur Kontaktierung zumindest der spröden Einheit, insbesondere der Strahlungseinheit, bereitzustellen. Insbesondere weist die zumindest eine Anbindungseinheit zwei relativ zu einer Haupterstreckung zumindest der spröden Einheit, insbesondere der Strahlungseinheit, einander gegenüberliegende Kontakteelemente auf. Das Kontaktelement ist insbesondere als eine vorzugsweise ringförmige Backe ausgebildet. Das Kontaktelement ist insbesondere zu einem Reibschluss zumindest mit der spröden Einheit, insbesondere der Strahlungseinheit, vorgesehen. Das Kontaktelement besteht zumindest teilweise, vorzugsweise zumindest zu einem Großteil und besonders bevorzugt vollständig aus einem Kunststoff, insbesondere einem säurebeständigen Kunststoff, welcher vorzugsweise auch gegenüber aggressiven Säuren, wie beispielsweise Königswasser, beständig ist. Besonders bevorzugt handelt es sich bei dem Kunststoff um Polytetrafluorethylen (PTFE), insbesondere auch bekannt unter dem Markennamen Teflon. Hierdurch kann eine besonders materialschonende Verbindung der spröden Einheit mit der Trägereinheit erzielt werden. Insbesondere können Schwingungen und/oder Scherkräfte gedämpft werden.

In einer besonders bevorzugten Ausgestaltung der Erfindung wird vorgeschlagen, dass die Kontaktfläche eine an zumindest eine Oberfläche zumindest der spröden Einheit, insbesondere der Strahlungseinheit, wenigstens im Wesentlichen angepasste Form aufweist. Insbesondere entspricht die Kontaktfläche zumindest im Wesentlichen einem Negativ der Oberfläche der spröden Einheit, insbesondere der Einhausung der spröden Einheit. Hierdurch kann eine Reibverbindung weiter verbessert werden.

Denkbar ist, dass das Führungselement und das Kontaktelement einstückig ausgebildet sind und/oder stoffschlüssig miteinander verbunden sind. Um eine Austauschbarkeit von Verschleißteilen zu verbessern, wird vorgeschlagen, dass das Führungselement zumindest formschlüssig mit dem Kontaktelement verbunden ist. Alternativ oder zusätzlich kann das Führungselement kraftschlüssig mit dem Kontaktelement verbunden sein. Ferner wird in einer bevorzugten Ausgestaltung der Erfindung vorgeschlagen, dass das Kontaktelement in das Führungselement eingeclipst ist. Hierdurch kann auf einfache Art und Weise das Kontaktelement mit dem Führungselement verbunden werden.

Es wird ferner vorgeschlagen, dass die Anbindungseinheit in zumindest einem montierten Zustand fest mit der Trägereinheit verbunden ist. Insbesondere kann die Halteeinheit eine Verbindungseinheit aufweisen, welche zu einer kraft- und/oder formschlüssigen Verbindung der Anbindungseinheit mit der Trägereinheit vorgesehen ist. Insbesondere kann die Anbindungseinheit kraft- und/oder formschlüssig mit der Trägereinheit verbunden sein, wie beispielsweise über eine Schraubverbindung. Hierdurch kann insbesondere eine Stabilität der Halterung verbessert werden.

Des Weiteren wird vorgeschlagen, dass die Halteeinheit zumindest eine Sicherungseinheit aufweist, welche in dem montierten Zustand die Verbindung der Trägereinheit mit der Anbindungseinheit sichert. Die Sicherungseinheit ist insbesondere dazu vorgesehen, die Verbindungseinheit in einem Zustand, in welchem diese die Anbindungseinheit mit der Trägereinheit verbindet, zu verriegeln. Die Sicherungseinheit umfasst zumindest ein Sicherungselement, welches dazu vorgesehen ist, ein Lösen der Verbindung der Trägereinheit und der Anbindungseinheit durch einen Formschluss zu verhindern. Insbesondere ist das Sicherungselement als ein Biegeteil ausgebildet, welches insbesondere bei einer Verbindung der Anbindungseinheit mit der Trägereinheit verklemmbar und zumindest einmal zerstörungsfrei verbiegbar ist, um einen Formschluss mit dieser auszubilden. Hierdurch kann vermieden werden, dass die Verbindung der Anbindungseinheit mit der Trägereinheit durch Schwingungen und/oder Scherkräfte in einem Betrieb gelöst wird.

Es wird weiterhin vorgeschlagen, dass die Rührvorrichtung zumindest die spröde Einheit, insbesondere die Strahlungseinheit, aufweist, welche zumindest teilweise aus Glas, insbesondere Quarzglas, besteht. Insbesondere besteht zumindest die spröde Einheit, insbesondere die Strahlungseinheit zumindest teilweise aus Glas. Insbesondere weist die Einhausung zumindest ein Glasschutzrohr auf. Das Glasschutzrohr kann insbesondere aus einem von Glas verschiedenen Material ausgebildet sein. Hierdurch kann eine Korrosionsbeständigkeit der spröden Einheit erzielt werden.

Ferner wird vorgeschlagen, dass die Halterung zumindest eine weitere Halteeinheit, insbesondere zumindest zwei und vorzugsweise mehrere weitere Halteeinheiten, aufweist, welche entlang der Behälterwand betrachtet, insbesondere entlang der Haupterstreckung der Behälterwand und/oder der spröden Einheit betrachtet, versetzt zu der Halteeinheit angeordnet ist/sind. Vorzugsweise ist die weitere Halteeinheit zumindest im Wesentlichen identisch zu der Halteeinheit ausgebildet. Insbesondere können die weiteren Halteeinheiten die Halteposition definieren, wobei zumindest die Halteeinheit zu einer Anpassung der Halterung vorzugsweise an eine Lage der spröden Einheit vorgesehen ist. Hierdurch kann insbesondere eine Stabilität der Halterung weiter verbessert werden. Insbesondere kann eine Gewichtskraft und/oder eine Querkraft und insbesondere können von außen auf die spröde Einheit wirkende Kräfte gleichmäßig verteilt werden. Ferner kann ein Schwingungsverhalten weiter verringert werden, indem ein Dämpfungsverhalten und/oder eine Resonanzfrequenz der Halterung durch ein zusätzliches Gewicht der weiteren Halteeinheit variiert werden kann.

In einem weiteren Aspekt der Erfindung wird ein Verfahren zur Montage einer spröden Einheit innerhalb eines Behälters mittels einer Halterung vorgeschlagen, wobei mittels zumindest einer Halteeinheit der Halterung Toleranzen ausgeglichen werden. Durch diese Ausgestaltung kann eine Zuverlässigkeit verbessert werden.

Die Rührvorrichtung soll hierbei nicht auf die oben beschriebene Anwendung und Ausführungsform beschränkt sein. Insbesondere kann die Rührvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Rührkessel mit einer Rührvorrichtung in einer Schnittansicht,
- Fig. 2: einen Teil der Rührvorrichtung mit einer Halterung in einer perspektivischen Ansicht,
- Fig. 3: einen Teil der Rührvorrichtung mit der Halterung in einer Explosionsdarstellung und

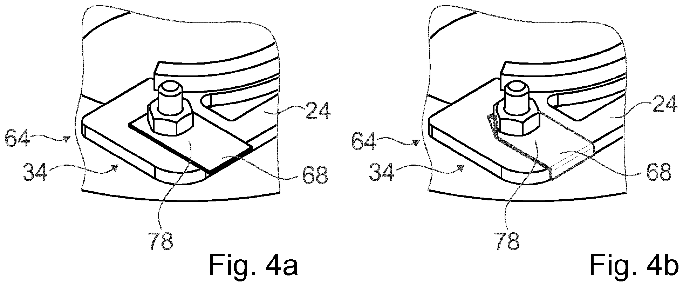

- Fig. 4: einen Teil der Rührvorrichtung mit einer Sicherungseinheit in verschiedenen Zuständen.

### Beschreibung der Ausführungsbeispiele

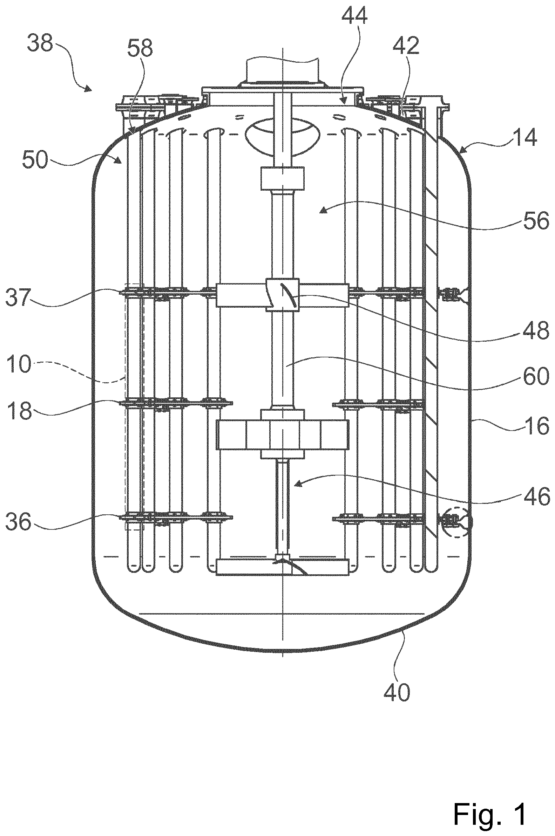

Fig. 1 zeigt einen Rührkessel 38 mit einer Rührvorrichtung in einer perspektivischen Darstellung. Die Rührvorrichtung ist im vorliegenden Fall als eine Reaktorrührvorrichtung ausgebildet.

Die Rührvorrichtung weist zumindest einen Behälter 14 auf. Der Behälter 14 weist eine Behälterwand 16 auf. Ferner weist der Behälter 14 einen Boden 40 auf. Der Boden 40 ist einstückig mit der Behälterwand 16 verbunden. Ferner weist der Behälter 14 einen Deckel 42 auf. Der Deckel 42 ist einstückig mit der Behälterwand 16 verbunden. Der Deckel 42 weist eine Öffnung 44 auf. Die Öffnung 44 ist verschließbar. Beispielsweise kann die Öffnung 44 mittels eines Flansches verschlossen werden. Die Öffnung 44 kann zu einer Befüllung des Behälters 14 mit einem Medium 56 vorgesehen sein. Ferner kann die Öffnung 44 zur Einbringung eines Rührwerks 46 der Rührvorrichtung vorgesehen sein.

Die Rührvorrichtung ist zu einer Bearbeitung eines Mediums 56 vorgesehen. Im vorliegenden Fall weist das Medium 56 zumindest einen Kunststoff auf. Der Kunststoff ist Polyvinylchlorid. Die Rührvorrichtung ist zu einer Chlorierung des Mediums 56 vorgesehen.

Das Rührwerk 46 ist zur Bearbeitung des Mediums 56 vorgesehen. Das Rührwerk 46 weist zumindest ein Rührelement 48 auf. Im vorliegenden Fall weist das Rührwerk 46 drei Rührelemente 48 auf. Zur besseren Übersichtlichkeit ist in den Zeichnungen nur ein Rührelement 48 mit einem Bezugszeichen versehen. Denkbar ist, dass das Rührwerk 46 eine von der hier gezeigten Anzahl abweichende Anzahl von Rührelementen 48 aufweisen kann, welche insbesondere zueinander identisch oder voneinander verschieden ausgebildet sein können. Das Rührwerk 46 weist eine Welle 60 auf, an welcher das Rührelement 48 drehfest gelagert ist. Denkbar ist, dass das Rührwerk 46 zumindest zwei oder mehrere Wellen 60 zur drehfesten Lagerung von Rührelementen 48 aufweist.

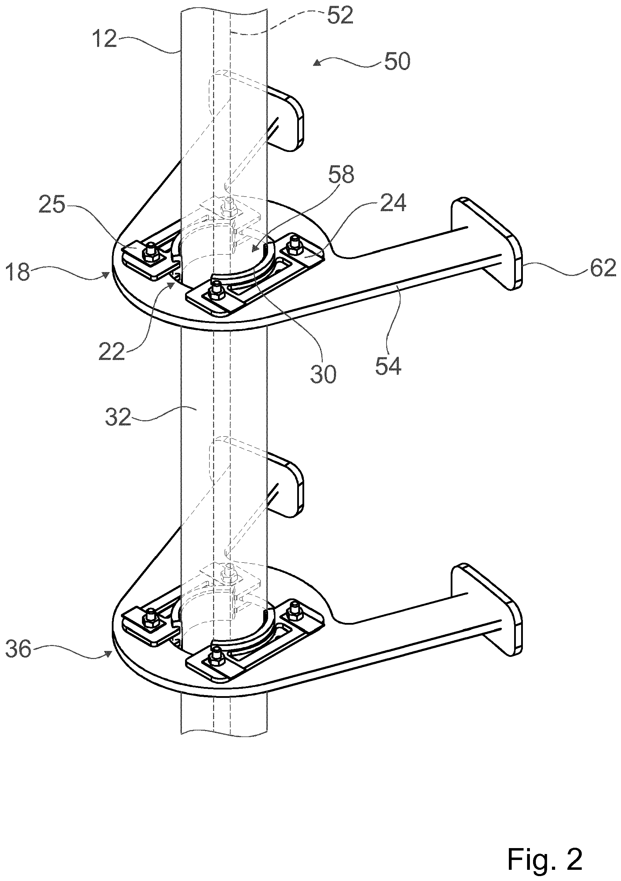

Die Rührvorrichtung weist zumindest eine Strahlungseinheit 50 auf (vgl. Fig. 2). Im vorliegenden Fall weist die Rührvorrichtung eine Anzahl von 16 Strahlungseinheiten 50 auf. Zur besseren Übersichtlichkeit ist in den Zeichnungen nur eine Strahlungseinheit 50 mit einem Bezugszeichen versehen. Ferner wird im Folgenden nur die Strahlungseinheit 50 näher beschrieben. Die Beschreibung ist unmittelbar auf weitere Strahlungseinheiten 50 übertragbar.

Die Strahlungseinheit 50 ist zu einer Bearbeitung des Mediums 56 vorgesehen. Die Strahlungseinheit 50 ist länglich ausgebildet. Die Strahlungseinheit 50 ist dazu vorgesehen, zumindest eine chemische Reaktion, insbesondere eine Chlorierung, des Mediums 56 zumindest zu initiieren und/oder aufrechtzuerhalten. Die Strahlungseinheit 50 weist eine Strahlungsquelle 52 auf. Die Strahlungsquelle 52 ist länglich ausgebildet. Die Strahlungsquelle 52 ist zu einer Beaufschlagung des Mediums 56 mit elektromagnetischer Strahlung, insbesondere mit UV-Strahlung, vorgesehen. Die Strahlungsquelle 52 kann beispielsweise als eine UV-Lampe, als eine UV-LED und/oder als ein UV-Laser ausgebildet sein.

Die Strahlungseinheit 50 weist eine spröde Einheit 12 auf. Die spröde Einheit 12 bildet eine Einhausung zum Schutz der Strahlungsquelle 52 aus. Die Strahlungsquelle 52 ist insbesondere zumindest teilweise, vorzugsweise zumindest zu einem Großteil und besonders bevorzugt vollständig zumindest in Umfangsrichtung von der spröden Einheit 12 umgeben. Die spröde Einheit 12 besteht zumindest teilweise aus einem Material, welches für die Strahlung der Strahlungsquelle 52 zumindest transluzent ist, insbesondere Glas und/oder Quarzglas. Die spröde Einheit 12 ist länglich ausgebildet. Die spröde Einheit 12 bildet zumindest teilweise die Strahlungseinheit 50 aus. Die spröde Einheit 12 bildet ein Glasrohr, insbesondere ein Quarzglasrohr aus. Eine Haupterstreckung der spröden Einheit 12 ist zumindest 15-mal so groß ist wie deren Durchmesser. Vorzugsweise entspricht die Haupterstreckung der spröden Einheit 12 zumindest 75 % der Haupterstreckung des Behälters 14.

Zu einer Montage zumindest der spröden Einheit 12 und insbesondere der Strahlungseinheit 50, sowie vorzugsweise zu einer Kontaktierung, wie beispielsweise zu einer Energieversorgung der Strahlungsquelle 52 weist der Behälter 14 eine Aufnahmeausnehmung 58 auf. Die Aufnahmeausnehmung 58 ist im Bereich des Deckels 42 angeordnet. Die Aufnahmeausnehmung 58 ist mittels eines Flansches verschließbar.

Die Rührvorrichtung weist zumindest eine Halterung 10 auf (vgl. Fig. 1). Die Halterung 10 ist dazu vorgesehen, zumindest die spröde Einheit 12, insbesondere die Strahlungseinheit 50, innerhalb des Behälters 14 relativ zu der wenigstens einen Behälterwand 16 des Behälters 14 zu halten. Die Rührvorrichtung weist je spröder Einheit 12 eine Halterung 10 auf. Die Halterungen 10 sind identisch zueinander ausgebildet. Zur besseren Übersicht ist in den Zeichnungen nur eine Halterung 10 mit einem Bezugszeichen versehen. In der folgenden Beschreibung ist nur eine Halterung 10 näher beschrieben. Die Beschreibung ist auf weitere Halterungen 10 unmittelbar übertragbar. Die Halterungen 10 sind zueinander in Umfangsrichtung der Behälterwand 16 versetzt angeordnet. Die Halterungen 10 sind insbesondere zueinander rotationssymmetrisch angeordnet.

Die Halterung 10 weist zumindest eine Halteeinheit 18 auf (vgl. Fig. 2). Im vorliegenden Fall weist die Halterung 10 eine Halteeinheit 18 auf. Ferner weist die Halterung 10 zwei weitere Halteeinheiten 36, 37 auf. Die Halteeinheit 18 und die weiteren Halteeinheiten 36, 37 sind identisch zueinander ausgebildet. Die Halteeinheit 18 und die weitere Halteeinheiten 36, 37 sind entlang der Behälterwand 16 versetzt zueinander, insbesondere untereinander, angeordnet, insbesondere entlang der Haupterstreckung der Behälterwand 16. Die weiteren Halteeinheiten 36, 37 definieren eine Halteposition der Halterung 10. Zumindest durch die Halteeinheit 18 ist die Halteposition der Halterung 10 relativ zur Behälterwand 16 anpassbar. Ferner ist denkbar, dass die Halteposition auch mittels der weiteren Halteeinheiten 36, 37 anpassbar ist. In der folgenden Beschreibung ist nur die Halteeinheit 18 näher beschrieben. Die Beschreibung ist auf die weiteren Halteeinheiten 36, 37 unmittelbar übertragbar.

Die Halteeinheit 18 hält zumindest die spröde Einheit 12, insbesondere die Strahlungseinheit 50, in einem von einem offenen Ende der spröden Einheit 12, insbesondere der Strahlungseinheit 50, verschiedenen Bereich.

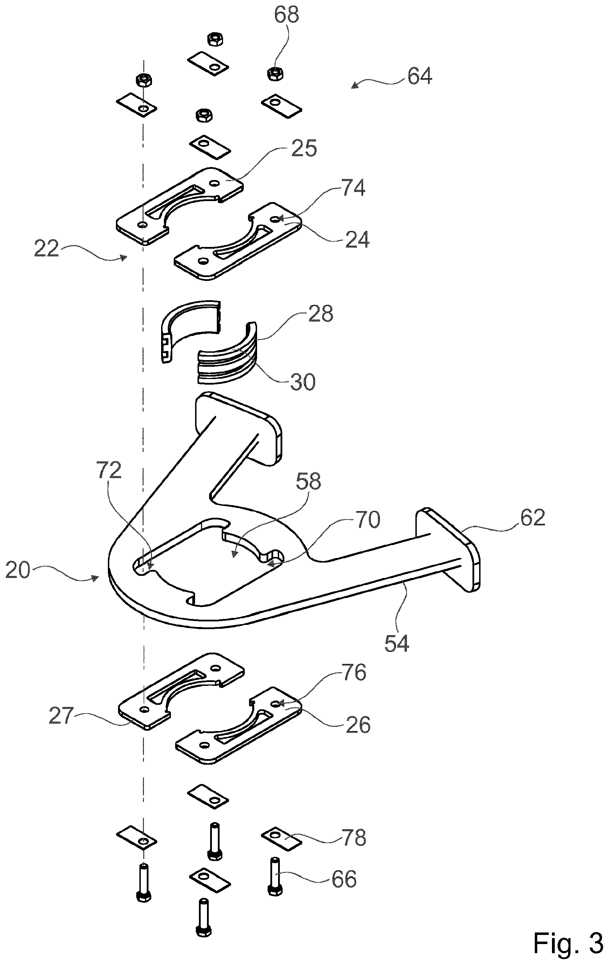

Die Halteeinheit 18 weist zumindest eine Trägereinheit 20 auf (vgl. Fig. 3). Die Trägereinheit 20 ist dazu vorgesehen, zumindest teilweise eine Gewichtskraft und/oder eine Querkraft der spröden Einheit 12, insbesondere der Strahlungseinheit 50, aufzunehmen. Das Trägereinheit 20 besteht aus einem korrosionsbeständigen Material, wie beispielsweise einem Metall, vorzugsweise Titan. Die Trägereinheit 20 ist in zumindest einem montierten Zustand mit der Behälterwand 16 verbunden. Im vorliegenden Fall ist die Trägereinheit 20 stoffschlüssig mit der Behälterwand 16 verbunden, und zwar vorzugsweise mit dieser verschweißt. Alternativ oder zusätzlich kann die Trägereinheit 20, insbesondere mittels zumindest eines Fußes 62, kraft- und/oder formschlüssig mit der Behälterwand 16 verbunden sein.

Zur Verbindung der Trägereinheit 20 mit der Behälterwand 16 weist die Trägereinheit 20 den zumindest einen Fuß 62 auf. Im vorliegenden Fall weist die Trägereinheit 20 zwei Füße 62 auf. Insbesondere zu einer Verbesserung einer Verbindung mit der Behälterwand 16 kann die Trägereinheit 20 eine von der hier gezeigten abweichende Anzahl an Füßen 62 aufweisen.

Die Trägereinheit 20 weist einen Grundkörper 54 auf. Der Fuß 62 ist mit dem Grundkörper 54 einstückig ausgebildet. Die Trägereinheit 20 weist die Aufnahmeausnehmung 58 auf. Die Aufnahmeausnehmung 58 ist im Bereich des Grundkörpers 54 angeordnet. Die Aufnahmeausnehmung 58 ist zumindest zur Aufnahme der spröden Einheit 12, insbesondere der Strahlungseinheit 50, vorgesehen.

Die Halteeinheit 18 weist zumindest eine Anbindungseinheit 22 auf. Die Anbindungseinheit 22 ist dazu vorgesehen, zumindest die spröde Einheit 12, insbesondere die Strahlungseinheit 50, zumindest teilweise in Umfangsrichtung zu umgreifen. Die Anbindungseinheit 22 verbindet zumindest die spröde Einheit 12, insbesondere die Strahlungseinheit 50, mit der Behälterwand 16.

Die Anbindungseinheit 22 ist in zumindest einem vormontierten Zustand relativ zu der Trägereinheit 20 beweglich gelagert. Die Anbindungseinheit 22 weist zumindest ein Führungselement 24 auf. Das Führungselement 24 ist zur beweglichen Lagerung der Anbindungseinheit 22 relativ zur Trägereinheit 20 vorgesehen. Das Führungselement 24 besteht aus einem korrosionsbeständigen Material, wie beispielsweise einem Metall, vorzugsweise Titan. Im vorliegenden Fall weist die Anbindungseinheit 22 zwei Führungselemente 24, 25 auf. Die Führungselemente 24, 25 sind identisch zueinander ausgebildet. Die Führungselemente 24, 25 sind relativ zu einer Haupterstreckung der spröden Einheit 12 einander gegenüberliegend angeordnet.

In einer bevorzugten Ausgestaltung der Erfindung wird vorgeschlagen, dass die Anbindungseinheit 22 zumindest ein weiteres Führungselement 26 aufweist. Das weitere Führungselement 26 ist relativ zu der Trägereinheit 20 dem Führungselement 25 gegenüberliegend angeordnet. Die Trägereinheit 20 ist in zumindest einem montierten Zustand zwischen dem Führungselement 24 und dem weiteren Führungselement 26 in Richtung der Haupterstreckung der Behälterwand 16 eingeklemmt. Im vorliegenden Fall weist die Anbindungseinheit 22 zwei weitere Führungselemente 26, 27 auf. Die weiteren Führungselemente 26, 27 sind identisch zueinander ausgebildet. Die weiteren Führungselemente 26, 27 sind relativ zu der Haupterstreckung der spröden Einheit 12 einander gegenüberliegend angeordnet.

Die Anbindungseinheit 22 weist zumindest ein Kontaktelement 28 auf. Im vorliegenden Fall weist die Anbindungseinheit 22 zumindest zwei Kontaktelemente 28 auf. Die Kontaktelemente 28 sind relativ zu der Haupterstreckung der spröden Einheit 12 einander gegenüberliegend angeordnet. Das Kontaktelement 28 ist dazu vorgesehen, zumindest eine Kontaktfläche 30 zumindest zur Kontaktierung der spröden Einheit 12, insbesondere der Strahlungseinheit 50, bereitzustellen. Die Kontaktfläche 30 weist eine an zumindest eine Oberfläche 32 der spröden Einheit 12 wenigstens im Wesentlichen angepasste Form auf. Das Kontaktelement 28 ist ringförmig. Das Kontaktelement 28 ist als eine Backe ausgebildet. Das Kontaktelement 28 ist zu einem Reibschluss mit der spröden Einheit 12 vorgesehen. Das Kontaktelement 28 besteht zumindest teilweise aus einem Kunststoff, insbesondere einem säurebeständigen Kunststoff, welcher vorzugsweise auch gegenüber aggressiven Säuren, wie beispielsweise Königswasser, beständig ist. Im vorliegenden Fall besteht das Kontaktelement 28 aus Polytetrafluorethylen (PTFE), insbesondere auch bekannt unter dem Markennamen Teflon. Das Führungselement 24 ist kraft- und/oder formschlüssig mit den Kontaktelement 28 verbunden. Das Kontaktelement 28 ist in das Führungselement 24 eingeclipst. In gleicher Weise ist das weitere Führungselement 26 mit dem Kontaktelement 28 verbunden.

Die Anbindungseinheit 22 ist in zumindest einem montierten Zustand fest mit der Trägereinheit 20 verbunden. Die Rührvorrichtung weist eine Verbindungseinheit 64 auf. Die Verbindungseinheit 64 ist zu einer Verbindung der Anbindungseinheit 22 mit der Trägereinheit 20 vorgesehen. Die Verbindungseinheit 64 ist zu einer kraft- und/oder formschlüssigen Verbindung der Anbindungseinheit 22 mit der Trägereinheit 20 vorgesehen. Die Trägereinheit 20 ist mittels der Verbindungseinheit 64 zwischen der Anbindungseinheit 22, insbesondere beidseitig, verklemmt. Der Grundkörper 54 der Trägereinheit 20 ist mittels der Verbindungseinheit 64 zwischen dem Führungselement 24 und dem weiteren Führungselement 26 verklemmt. Ferner ist der Grundkörper 54 der Trägereinheit 20 mittels der Verbindungseinheit 64 zwischen dem Führungselement 25 und dem weiteren Führungselement 27 verklemmt.

Die Verbindungseinheit 64 ist als eine Schraubverbindung ausgebildet. Die Verbindungseinheit 64 weist zumindest ein erstes Verbindungselement 66 auf. Im vorliegenden Fall weist die Verbindungseinheit 64 vier solcher Verbindungselemente 66 auf. Zur besseren Übersicht ist in den Zeichnungen nur ein Verbindungselement 66 mit einem Bezugszeichen versehen. Die Verbindungselemente 66 sind identisch zueinander ausgebildet. Das Verbindungselement 66 ist als eine Schraube ausgebildet.

Ferner umfasst die Verbindungseinheit 64 zumindest ein zu dem Verbindungselement 66 korrespondierendes Verbindungselement 68. Im vorliegenden Fall weist die Verbindungseinheit 64 vier solcher korrespondierender Verbindungselemente 68 auf. Zur besseren Übersicht ist in den Zeichnungen nur ein korrespondierendes Verbindungselement 68 mit einem Bezugszeichen versehen. Die korrespondierenden Verbindungselemente 68 sind identisch zueinander ausgebildet. Das korrespondierende Verbindungselement 68 ist als eine Mutter ausgebildet.

Die Verbindungseinheit 64 umfasst eine Verbindungsausnehmung 70. Die Trägereinheit 20 weist die Verbindungsausnehmung 70 im Bereich des Grundkörpers 54 auf. Die Verbindungsausnehmung 70 ist mit der Aufnahmeausnehmung 58 verbunden. Die Verbindungsausnehmung 70 ist als ein Langloch ausgebildet. Ferner umfasst die Verbindungseinheit 64 eine weitere Verbindungsausnehmung 72. Die weitere Verbindungsausnehmung 72 ist relativ zu der Haupterstreckung der spröden Einheit 12 der Verbindungsausnehmung 70 gegenüberliegend angeordnet. Die weitere Verbindungsausnehmung 72 ist identisch zu der Verbindungsausnehmung 70 ausgebildet.

Die Verbindungseinheit 64 umfasst zumindest eine Führungsausnehmung 74. Die Führungsausnehmung 74 ist als eine Ausnehmung des Führungselements 24 ausgebildet. Im vorliegenden Fall umfasst die Verbindungseinheit 64 je Verbindungselement 66 bzw. korrespondierendes Verbindungselement 68 eine Führungsausnehmung 74. Ferner weist im vorliegenden Fall jedes Führungselement 24, 25 zwei Führungsausnehmungen 74 auf.

Die Verbindungseinheit 64 umfasst zumindest eine weitere Führungsausnehmung 76. Die Führungsausnehmung 76 ist als eine Ausnehmung des weiteren Führungselements 26 ausgebildet. Im vorliegenden Fall umfasst die Verbindungseinheit 64 je Verbindungselement 66 bzw. korrespondierendes Verbindungselement 68 eine weitere Führungsausnehmung 76. Ferner weist im vorliegenden Fall jedes weiteres Führungselement 26, 27 zwei weitere Führungsausnehmungen 76 auf.

Zu einer Verbindung der Anbindungseinheit 22 mit der Trägereinheit 20 ist das Führungselement 26 durch die weitere Führungsausnehmung 76, die Verbindungsausnehmung 70 und die Führungsausnehmung 74 geführt und mit dem korrespondierenden Verbindungselement 68 verbunden.

Die Halteeinheit 18 weist zumindest eine Sicherungseinheit 34 auf. Die Sicherungseinheit 34 sichert in dem montierten Zustand die Verbindung der Trägereinheit 20 mit der Anbindungseinheit 22. Die Sicherungseinheit 34 verriegelt die Verbindungseinheit 64 in einer Position, in welcher diese die Anbindungseinheit 22 mit der Trägereinheit 20 verbindet.

Die Sicherungseinheit 34 umfasst zumindest ein Sicherungselement 78. Im vorliegenden Fall weist die Sicherungseinheit 34 je Führungselement 24, 25, 26, 27 zwei Sicherungselemente 78 auf. Das Sicherungselement 78 ist dazu vorgesehen, ein Lösen der Verbindung der Trägereinheit 20 und der Anbindungseinheit 22 durch einen Formschluss zu verhindern. Das Sicherungselement 78 ist als ein Biegeteil ausgebildet. Das Sicherungselement 78 ist bei einer Verbindung der Anbindungseinheit 22 mit der Trägereinheit 20 verklemmbar und insbesondere zumindest einmal zerstörungsfrei verbiegbar, um einen Formschluss auszubilden. Das Sicherungselement 78 ist an eine Form der Anbindungseinheit 22, insbesondere des Führungselements 24, 25, 26, 27, anpassbar. Insbesondere ist das Sicherungselement 78 an eine Kante des Führungselements 24, 25, 26, 27 anpassbar. Das Sicherungselement 78 ist an das Verbindungselement 66 und/oder das korrespondierende Verbindungselement 68 anpassbar. Insbesondere ist das Sicherungselement 78 an eine Kante des Verbindungselements 66 und/oder des korrespondierenden Verbindungselements 68 anpassbar.

### Bezugszeichen

- 10: Halterung
- 12: Spröde Einheit
- 14: Behälter
- 16: Behälterwand
- 18: Halteeinheit
- 20: Trägereinheit
- 22: Anbindungseinheit
- 24: Führungselement
- 25: Führungselement
- 26: Weiteres Führungselement
- 27: Weiteres Führungselement
- 28: Kontaktelement
- 30: Kontaktfläche
- 32: Oberfläche
- 34: Sicherungseinheit
- 36: Weitere Halteeinheit
- 37: Weitere Halteeinheit
- 38: Rührkessel
- 40: Boden
- 42: Deckel
- 44: Öffnung
- 46: Rührwerk
- 48: Rührelement
- 50: Strahlungseinheit
- 52: Strahlungsquelle
- 54: Grundkörper
- 56: Medium
- 58: Aufnahmeausnehmung
- 60: Welle
- 62: Fuß
- 64: Verbindungseinheit
- 66: Verbindungselement
- 68: Korrespondierendes Verbindungselement
- 70: Verbindungsausnehmung
- 72: Weitere Verbindungsausnehmung
- 74: Führungsausnehmung
- 76: Weitere Führungsausnehmung
- 78: Sicherungselement

## Patentansprüche

1. Rührvorrichtung, welche zumindest ein Rührwerk (46) umfasst, mit zumindest einer Halterung (10), welche dazu speziell ausgelegt ist, zumindest eine spröde Einheit (12), welche durch äußere Krafteinwirkung elastisch verformbar ist und durch diese zerstörbar ist, bevor die spröde Einheit (12) dauerhaft plastisch verformbar ist, innerhalb eines Behälters (14) relativ zu wenigstens einer Behälterwand (16) des Behälters (14) zu halten, und welche hierzu zumindest eine Halteeinheit (18) aufweist, wobei die Halteeinheit (18) zumindest eine Trägereinheit (20) aufweist, welche dazu vorgesehen ist, zumindest teilweise eine Gewichtskraft und/oder eine Querkraft der spröden Einheit (12) aufzunehmen, und welche in zumindest einem montierten Zustand mit der Behälterwand (16) verbunden ist und die Halteeinheit (18) zumindest eine Anbindungseinheit (22) aufweist, welche dazu vorgesehen ist, die spröde Einheit (12) zumindest teilweise in Umfangsrichtung zu umgreifen und mit der Behälterwand (16) zu verbinden, **dadurch gekennzeichnet, dass** durch die Halteeinheit (18) zumindest eine Halteposition der Halterung (10) relativ zur Behälterwand (16) zu einem Ausgleich von Herstellungs- und/oder Montagetoleranzen anpassbar ist und die Anbindungseinheit (22) in zumindest einem vormontierten Zustand, in welchem Komponenten beweglich miteinander verbunden sind, sich aber noch nicht in ihrer Endposition befinden, relativ zu der Trägereinheit (20) beweglich gelagert ist.

2. Rührvorrichtung nach Anspruch 1, **dadurch gekennzeichnet, dass** die Anbindungseinheit (22) zumindest ein Führungselement (24, 25) zur beweglichen Lagerung relativ zur Trägereinheit (20) aufweist.

3. Rührvorrichtung nach Anspruch 2, **dadurch gekennzeichnet, dass** die Anbindungseinheit (22) zumindest ein weiteres Führungselement (26, 27) aufweist und die Trägereinheit (20) in zumindest einem montierten Zustand zwischen dem Führungselement (24, 25) und dem weiteren Führungselement (26, 27) eingeklemmt ist.

4. Rührvorrichtung nach einem der vorhergehenden Ansprüche, **dadurch gekennzeichnet, dass** die Anbindungseinheit (22) zumindest ein Kontaktelement (28) aufweist, welches dazu vorgesehen ist, zumindest eine Kontaktfläche (30) zur Kontaktierung der spröden Einheit (12) bereitzustellen.

5. Rührvorrichtung nach Anspruch 4, **dadurch gekennzeichnet, dass** die Kontaktfläche (30) eine an zumindest eine Oberfläche (32) der spröden Einheit (12) wenigstens im Wesentlichen angepasste Form aufweist.

6. Rührvorrichtung zumindest nach den Ansprüchen 2 und 4, **dadurch gekennzeichnet, dass** das Führungselement (24, 25, 26, 27) zumindest formschlüssig mit dem Kontaktelement (28) verbunden ist.

7. Rührvorrichtung nach Anspruch 6, **dadurch gekennzeichnet, dass** das Kontaktelement (28) in das Führungselement (24, 25, 26, 27) eingeclipst ist.

8. Rührvorrichtung nach einem der vorhergehenden Ansprüche, **dadurch gekennzeichnet, dass** die Anbindungseinheit (22) in zumindest einem montierten Zustand fest mit der Trägereinheit (20) verbunden ist.

9. Rührvorrichtung nach Anspruch 8, **dadurch gekennzeichnet, dass** die Halteeinheit (18) zumindest eine Sicherungseinheit (34) aufweist, welche in dem montierten Zustand die Verbindung der Trägereinheit (20) mit der Anbindungseinheit (22) sichert.

10. Rührvorrichtung nach einem der vorhergehenden Ansprüche, **gekennzeichnet durch** die spröde Einheit (12), welche zumindest teilweise aus Glas besteht.

11. Rührvorrichtung nach einem der vorhergehenden Ansprüche, **dadurch gekennzeichnet, dass** die Halterung (10) zumindest eine weitere Halteeinheit (36, 37) aufweist, welche entlang der Behälterwand (16) betrachtet versetzt zu der Halteeinheit (18) angeordnet ist.

12. Verfahren zur Montage einer spröden Einheit (12), welche durch äußere Krafteinwirkung elastisch verformbar ist und durch diese zerstörbar ist, bevor die spröde Einheit (12) dauerhaft plastisch verformbar ist, innerhalb eines Behälters (14) mittels einer Halterung (10), insbesondere bei einer Rührvorrichtung nach einem der vorhergehenden Ansprüche, wobei die Halterung (10) zumindest eine Halteeinheit (18) aufweist, wobei die Halteeinheit (18) zumindest eine Trägereinheit (20) aufweist, welche zumindest teilweise eine Gewichtskraft und/oder eine Querkraft der spröden Einheit (12) aufnimmt, und welche mit einer Behälterwand (16) des Behälters (14) verbunden ist und die Halteeinheit (18) zumindest eine Anbindungseinheit (22) aufweist, welche die spröde Einheit (12) zumindest teilweise in Umfangsrichtung umgreift und mit der Behälterwand (16) verbindet, **dadurch gekennzeichnet, dass** mittels zumindest einer Halteeinheit (18) der Halterung (10) Herstellungs- und/oder Montagetoleranzen durch eine Anpassung einer Halteposition der Halterung (10) ausgeglichen werden und die Anbindungseinheit (22) in zumindest einem vormontierten Zustand, in welchem Komponenten beweglich miteinander verbunden sind, sich aber noch nicht in ihrer Endposition befinden, relativ zu der Trägereinheit (20) beweglich gelagert wird.

## Claims

1. Stirring device comprising at least one agitator (46),
with at least one holder (10) specifically designed for holding at least one brittle unit (12), which is elastically deformable by external force impact and can be destroyed by said force impact before the brittle unit (12) is permanently plastically deformable, within a container (14) relative to at least one container wall (16) of the container (14)
and which for this purpose comprises at least one holding unit (18),
said holding unit (18) comprising at least one carrier unit (20) which is configured to at least partially receive a weight force and/or a transverse force of the brittle unit (12) and which is connected to the container wall (16) in at least one mounted state,
the holding unit (18) also comprising at least one connection unit (22), which is configured to at least partially engage around the brittle unit (12) in a circumferential direction and to connect the brittle unit (12) to the container wall (16),
**characterised in that** by means of the holding unit (18) at least one holding position of the holder (10) with respect to the container wall (16) is adaptable for a compensation of manufacturing and/or mounting tolerances,
and the connection unit (22) is supported movably relative to the carrier unit (20) in at least one pre-mounted state in which components are connected to each other movably but are not yet in their final position.

2. Stirring device according to claim 1,
**characterized in that** the connection unit (22) comprises at least one guide element (24, 25) for a movable support relative to the carrier unit (20).

3. Stirring device according to claim 2,
**characterised in that** the connection unit (22) comprises at least one further guide element (26, 27) and the carrier unit (20) is in at least one mounted state clamped between the guide element (24, 25) and the further guide element (26, 27).

4. Stirring device according to one of the preceding claims,
**characterised in that** the connection unit (22) comprises at least one contact element (28), which is configured to provide at least one contact surface (30) for making contact with the brittle unit (12).

5. Stirring device according to claim 4,
**characterised in that** the contact surface (30) has a shape that is at least substantially adapted to at least one surface (32) of the brittle unit (12).

6. Stirring device at least according to claims 2 and 4,
**characterised in that** the guide element (24, 25, 26, 27) is connected to the contact element (28) at least in a form-fitting manner.

7. Stirring device according to claim 6,
**characterised in that** the contact element (28) is clipped into the guide element (24, 25, 26, 27).

8. Stirring device according to one of the preceding claims,
**characterised in that** in at least one mounted state the connection unit (22) is fixedly connected with the carrier unit (20).

9. Stirring device according to claim 8,
**characterized in that** the holding unit (18) comprises at least one securing unit (34), which in the mounted state secures the connection of the carrier unit (20) with the connection unit (22).

10. Stirring device according to one of the preceding claims,
**characterised by** the brittle unit (12), which is at least partly made of glass.

11. Stirring device at least according to one of the preceding claims,
**characterized in that** the holder (10) comprises at least one further holding unit (36, 37) which is arranged, viewed along the container wall (16), offset from the holding unit (18).

12. Method for a mounting of a brittle unit (12),
which is elastically deformable by external force impact and can be destroyed by said force impact before the brittle unit (12) is permanently plastically deformable, within a container (14) by means of a holder (10), in particular with a stirring device according to one of the preceding claims,
wherein the holder (10) comprises at least one holding unit (18), wherein the holding unit (18) comprises at least one carrier unit (20) which receives a weight force and/or a transverse force of the brittle unit (12) at least partially and which is connected to a container wall (16) of the container (14), and wherein the holding unit (18) comprises at least one connection unit (22) which engages around the brittle unit (12) at least partially in a circumferential direction and connects the brittle unit (12) to the container wall (16), **characterised in that** by means of at least one holding unit (18) of the holder (10), manufacturing and mounting tolerances are compensated by an adaption of a holding position of a holder (10), and the connection unit (22) is supported movably relative to the carrier unit (20) in at least one pre-mounted state in which components are connected to one another movably but are not yet in their final position.

## Revendications

1. Dispositif d'agitation comprenant au moins un agitateur (46),
avec au moins un rétenteur (10) conçu spécifiquement pour retenir au moins une unité friable (12), qui est élastiquement déformable par un effet de force externe et peut être détruite par ledit effet de force avant que l'unité friable (12) soit plastiquement déformable en permanence, dans un récipient (14) par rapport à au moins une paroi-récipient (16) du récipient (14) ledit rétenteur (10) comprenant à cette fin au moins une unité à retenue (18), l'unité à retenue (18) incluant au moins une unité porteuse (18) qui est destinée à recevoir au moins partiellement une force de poids et/ou une force transversale de l'unité friable (12) et qui est en au moins un état monté liée avec la paroi-récipient (16) au moins partiellement,
et l'unité à retenue (18) incluant au moins une unité de raccordement (22) qui est destinée à saisir l'unité friable (12) au moins partiellement en direction circonférentielle, raccordant ladite unité friable (12) à la paroi-récipient (16), **caractérisé en ce qu'au** moins une position de retenue du rétenteur (10) par rapport à la paroi-récipient (16) peut être adaptée par l'unité à retenue (18) pour une compensation de tolérances de fabrication et/ou d'assemblage et l'unité de raccordement (22) est supportée de façon mouvable par rapport à l'unité porteuse (20) en au moins un état prémonté, dans lequel des composants sont raccordés mouvablement l'un avec l'autre mais ne sont pas encore dans ses positions finales.

2. Dispositif d'agitation selon la revendication 1,
**caractérisé en ce que** l'unité de raccordement (22) comprend au moins un élément de guidage (24, 25) pour un support mobile par rapport à l'unité porteuse (20).

3. Dispositif d'agitation selon la revendication 2,
**caractérisé en ce que** l'unité de raccordement (22) comprend au moins un autre élément de guidage (26, 27) et l'unité porteuse (20) est en au moins un état monté serrée entre l'élément de guidage (24, 25) et l'autre élément de guidage (26, 27).

4. Dispositif d'agitation selon l'une des revendications précédentes,
**caractérisé en ce que** l'unité de raccordement (22) comprend au moins un élément de contact (28) destiné à pourvoir au moins une surface-contact (30) pour contacter l'unité friable (12).

5. Dispositif d'agitation selon la revendication 4,
**caractérisé en ce que** la surface-contact (30) présente une forme au moins sensiblement adaptée à au moins une surface (32) de l'unité friable (12).

6. Dispositif d'agitation au moins selon les revendications 2 et 4,
**caractérisé en ce que** l'élément de guidage (24, 25, 26, 27) est lié à l'élément de contact (28) au moins en liaison par forme.

7. Dispositif d'agitation au moins selon la revendication 6,
**caractérisé en ce que** l'élément de contact (28) est clipsé dans l'élément de guidage (24, 25, 26, 27).

8. Dispositif d'agitation selon l'une des revendications précédentes,
**caractérisé en ce qu'**en au moins un état monté l'unité de raccordement (22) est raccordée fixement avec l'unité porteuse (20).

9. Dispositif d'agitation selon la revendication 8,
**caractérisé en ce que** l'unité à retenue (18) comprend au moins une unité-sauvegarde (34) sécurisant en état monté le raccordement de l'unité porteuse (20) avec l'unité de raccordement (22).

10. Dispositif d'agitation selon l'une des revendications précédentes,
**caractérisé par** l'unité friable (12) qui est faite au moins partiellement de verre.

11. Dispositif d'agitation selon l'une des revendications précédentes,
**caractérisé en ce que** le rétenteur (10) comprend au moins une autre unité à retenue (36, 37) qui est disposée, vue le long de la paroi-récipient (16), décalée par rapport à l'unité à retenue (18).

12. Procédé pour le montage d'une unité friable (12), qui est élastiquement déformable par un effet de force externe et peut être détruite par ledit effet de force avant que l'unité friable (12) soit plastiquement déformable en permanence, dans un récipient (14) par le biais d'une unité à retenue (18), en particulier dans un dispositif d'agitation selon l'une des revendications précédentes,
où le rétenteur (10) comprend au moins une unité à retenue (18),
où l'unité à retenue (18) comprend au moins une unité porteuse (20) qui reçoit au moins partiellement une force de poids et/ou une force transversale de l'unité friable (12) et est liée avec une paroi-récipient (16) du récipient (14),
et où l'unité à retenue (18) comprend au moins une unité de raccordement (22) qui saisit l'unité friable (12) au moins partiellement en direction circonférentielle, liant l'unité friable (14) à la paroi-récipient (16),
**caractérisé en ce que** des tolérances de fabrication et/ou d'assemblage sont compensées moyennant au moins une unité à retenue (18) du rétenteur (10) par une adaptation d'une position de retenue du rétenteur (10), et
l'unité de raccordement (22) est supportée mouvablement par rapport à l'unité porteuse (20) dans au moins un état prémonté, dans lequel des composants sont liés mouvablement les uns avec les autres mais ne sont pas encore dans ses positions finales.
